# EUROPÄISCHE PATENTSCHRIFT

(11) **EP 3 701 341 B1**
(45) Veröffentlichungstag und Bekanntmachung des Hinweises auf die Patenterteilung: **29.12.2021**
(21) Anmeldenummer: 18815534.5
(22) Anmeldetag: 22.11.2018
(51) Int. Cl.: G05B 19/042, G05B 19/418, G05B 23/02

(54) **VERFAHREN ZUR RECHNERGESTÜTZTEN VERARBEITUNG VON BETRIEBSDATEN EINES TECHNISCHEN SYSTEMS**
METHOD FOR COMPUTER-CONTROLLED PROCESSING OF OPERATING PARAMETERS OF A TECHNICAL SYSTEM
PROCÉDÉ DE TRAITEMENT ASSISTÉ PAR ORDINATEUR DE PARAMÈTRES DE FONCTIONNEMENT D'UN SYSTÈME TECHNIQUE

(30) Priorität: 27.12.2017 EP 17210676
(43) Veröffentlichungstag der Anmeldung: 02.09.2020
(73) Patentinhaber: Siemens Aktiengesellschaft, 80333 München (DE)
(72) Erfinder: KEHRER, Johannes, 81829 München (DE); WEBER, Stefan Hagen, 81927 München (DE); PAULITSCH, Christoph, 76137 Karlsruhe (DE); KRÜGER, Sebastian, 91058 Erlangen/Eltersdorf (DE); SÜER, Mahmut Halil, 90765 Fürth (DE); VOGEL, Thomas, 76684 Östringen (DE); WINTER, Jens, 37235 Hessisch Lichtenau (DE)
(86) Internationale Anmeldenummer: PCT/EP2018/082218
(87) Internationale Veröffentlichungsnummer: WO 2019/129445

(56) Entgegenhaltungen:
- EP-A1- 1 895 416
- EP-A1- 2 453 330
- EP-A1- 3 007 019
- EP-A2- 2 631 727
- EP-A2- 2 833 228

## Beschreibung

Die Erfindung betrifft ein Verfahren und eine Vorrichtung zur rechnergestützten Verarbeitung von Betriebsdaten eines technischen Systems. Ferner betrifft die Erfindung ein Computerprogrammprodukt und ein Computerprogramm.

Ein Betriebspunkt bzw. Betriebszustand eines technischen Systems wird in der Regel durch einen bestimmten Punkt in einem mehrdimensionalen Zustandsraum beschrieben, wobei dieser Punkt aufgrund von Eigenschaften des technischen Systems sowie ggf. äußeren Einflüssen und anderen Parametern eingenommen wird. Einem Betriebspunkt sind dabei die Werte von mehreren Variablen zugeordnet, wobei diese Variablen im Folgenden als erste und zweite Zustandsvariablen bezeichnet werden. Für eine oder mehrere dieser Zustandsvariablen, welche im Folgenden als zweite Zustandsvariablen bezeichnet werden, existieren in Abhängigkeit von dem Betriebsbereich des technischen Systems entsprechende Schwellwertkriterien, über welche angezeigt wird, ob unter Umständen ein fehlerhaftes Verhalten des technischen Systems vorliegt.

Es besteht ein Bedarf, die Werte der oben beschriebenen ersten und zweiten Zustandsvariablen einfach und kompakt zu visualisieren, so dass ein Benutzer intuitiv ein Fehlverhalten des technischen Systems erkennen kann.

Herkömmliche Lösungen zur Visualisierung von Betriebszuständen eines technischen Systems verwenden zur Charakterisierung der Zustände z.B. eine Farbgebung nach Art einer Ampel, wobei eine grüne Farbe einen Normalzustand, eine gelbe Farbe einen kritischen Zustand und eine rote Farbe einen unerlaubten bzw. hochkritischen Zustand darstellt. Die entsprechende Farbgebung wird unter anderem in Prozessdiagrammen, Alarmlisten mit Zeitstempeln, Prozessschrittketten und dergleichen genutzt.

EP1895416A1 offenbart eine visuelle Darstellung der relativen Schwere und Ähnlichkeit verschiedener Fehlerzustände, die innerhalb einer Vielzahl von Geräten innerhalb des komplexen Computersystems auftreten. Die visuelle Darstellung zeigt visuell die verschiedenen Computergeräte und / oder Ressourcen innerhalb eines dreidimensionalen Gitters, das gemäß einer ersten Achse angeordnet ist, die die Schwere der Fehlerzustände darstellt, die von den Geräten / Ressourcen erfahren werden, und der zweiten und dritten Achse, die die Ähnlichkeit / Ungleichheit der dargestellten Arten von Fehlerzuständen darstellt, die von den Geräten / Ressourcen erfahren werden.

EP2833228A2 offenbart eine Anzeigevorrichtung, die kommunikativ mit einem Industriemonitor verbunden ist und derart konfiguriert ist, gleichzeitig eine Darstellung eines aktuellen Wertes einer bestimmten Messung und eine Darstellung eines historischen Maximalwerts der bestimmten Messung darzustellen.

Die bekannten Lösungen gehen in der Regel mit einer komplexen Visualisierung einher, so dass kritische Zustände und damit verknüpfte Informationen oftmals nicht schnell durch den Benutzer erfasst werden können.

Aufgabe der Erfindung ist es, ein Verfahren zur rechnergestützten Verarbeitung von Betriebsdaten eines technischen Systems zu schaffen, welches eine einfach erfassbare und aussagekräftige Visualisierung von kritischen Zuständen des technischen Systems bereitstellt.

Diese Aufgabe wird durch ein Verfahren gemäß den Merkmalen des Patentanspruchs 1, eine Vorrichtung gemäß den Merkmalen des Patentanspruchs 23, ein Computerprogrammprodukt gemäß den Merkmalen des Patentanspruchs 25 und ein Computerprogramm gemäß den Merkmalen des Patentanspruchs 26 gelöst. Weiterbildungen der Erfindung sind in den abhängigen Ansprüchen definiert.

Das erfindungsgemäße Verfahren dient zur rechnergestützten Verarbeitung von Betriebsdaten eines technischen Systems, wobei die Betriebsdaten während des Betriebs des technischen Systems in einem vorgegebenen Betriebsintervall erfasst worden sind und als digitale Daten in einem Speicher hinterlegt sind.

In dem erfindungsgemäßen Verfahrens wird aus den Betriebsdaten für eine Vielzahl von Betriebszeitpunkten innerhalb des vorgegebenen Betriebsintervalls jeweils ein Zustandsvektor extrahiert, der ein Paar von ersten Zustandsvariablen mit zugeordneten Zustandswerten des technischen Systems zum jeweiligen Betriebszeitpunkt und zumindest eine zweite Zustandsvariable aus einer Anzahl von zweiten Zustandsvariablen mit zugeordneten Zustandswerten des technischen Systems zum jeweiligen Betriebszeitpunkt umfasst. Die zweiten Zustandsvariablen sind Größen des technischen Systems, wie z.B. geeignete Sensorwerte bzw. Kenngrößen, die zu einem entsprechenden Betriebszeitpunkt vorliegen und über welche erkannt werden kann, ob der Zustand des technischen Systems normal ist oder in einem kritischen Bereich liegt. Demgegenüber charakterisieren die ersten Zustandsvariablen den Zustand des technischen Systems im entsprechenden Betriebszeitpunkt, ohne dass aus diesen Variablen zwangsläufig abgeleitet werden kann, ob sich das technische System in einem kritischen Zustand befindet. Entsprechende Beispiele von Betriebsdaten sowie ersten und zweiten Zustandsvariablen werden weiter unten gegeben.

Erfindungsgemäß wird eine zweidimensionale Darstellung auf einer Anzeige einer Benutzerschnittstelle generiert, wobei die Darstellung den zweidimensionalen Raum der Zustandswerte der Paare von ersten Zustandsvariablen der Zustandsvektoren in einem kartesischen Koordinatensystem entspricht. Mit anderen Worten wird der Zustandsraum über eine Ebene beschrieben, die durch zwei senkrecht aufeinander stehende Achsen aufgespannt wird, wobei eine Achse die Zustandswerte einer ersten Zustandsvariablen und die andere Achse die Zustandswerte der anderen ersten Zustandsvariablen repräsentiert. Die Achsen müssen dabei nicht zwangsläufig Bestandteil der zweidimensionalen Darstellung sein. Die eine Achse des kartesischen Koordinatensystems verläuft in der zweidimensionalen Darstellung vorzugsweise in horizontaler Richtung und die andere Achse vorzugsweise in vertikaler Richtung.

In der zweidimensionalen Darstellung wird eine Vielzahl von aneinander angrenzenden Zustandsbereichen wiedergegeben, wobei alle Zustandsvektoren mit Zustandswerten von Paaren von ersten Zustandsvariablen innerhalb eines jeweiligen Zustandsbereichs diesen Zustandsbereich zugeordnet sind und für die Zustandswerte jeder zweiten Zustandsvariablen der Zustandsvektoren, die dem jeweiligen Zustandsbereich zugeordnet sind, ein Schwellwertkriterium umfassend zumindest einen Schwellwert definiert ist. Es existiert somit zumindest ein Schwellwert, der für die jeweilige zweite Zustandsvariable und für den jeweiligen Zustandsbereich spezifisch ist. Durch geeignete Definition eines Kriteriums des Überschreitens bzw. Unterschreitens des zumindest einen Schwellwerts ist das Schwellwertkriterium festgelegt. Bei der Erfüllung des Schwellwertkriteriums wird der entsprechende Zustandswert der jeweiligen zweiten Zustandsvariablen des Zustandsvektors als normal für den Betrieb des technischen Systems eingestuft. Umgekehrt ausgedrückt wird ein entsprechender Zustandswert, der das Schwellwertkriterium nicht erfüllt, als kritisch für den Betrieb des technischen Systems angesehen.

Im Rahmen des erfindungsgemäßen Verfahrens wird ferner in einem jeweiligen Zustandsbereich ein Balkendiagramm wiedergegeben, in dem zu jeder zweiten Zustandsvariablen ein erster Balken und ein zweiter Balken des Balkendiagramms gehört. Ein Balken kann dabei ggf. auch die Länge von Null aufweisen, was im entsprechenden Balkendiagramm durch einen leeren Platzhalter erkannt werden kann. Die Länge des ersten Balkens repräsentiert die Anzahl von ersten Zustandsvektoren oder eine aus den Betriebszeitpunkten der ersten Zustandsvektoren abgeleitete Auftretenszeitspanne für die Anzahl von ersten Zustandsvektoren. Dabei sind die ersten Zustandsvektoren alle Zustandsvektoren, welche dem jeweiligen Zustandsbereich zugeordnet sind und die jeweilige zweite Zustandsvariable enthalten. Alternativ sind die ersten Zustandsvektoren alle Zustandsvektoren, die dem jeweiligen Zustandsbereich zugeordnet sind und die jeweilige zweite Zustandsvariable enthalten und für welche ferner der Zustandswert der jeweiligen zweiten Zustandsvariablen das Schwellwertkriterium erfüllt.

Die oben definierte Auftretenszeitspanne für die Anzahl von ersten Zustandsvektoren kann beispielsweise dann ermittelt werden, wenn ein entsprechender Betriebszeitpunkt immer auch den Wechsel von zumindest einem Zustandswert des Zustandsvektors anzeigt. In diesem Fall ergibt sich aus der Zeitspanne zwischen aufeinander folgenden Betriebszeitpunkten die Zeitspanne, in der ein Zustandsvektor mit entsprechenden Zustandswerten vorlag. In gleicher Weise kann auch die weiter unten erwähnte Auftretenszeitspanne für die Anzahl von zweiten Zustandsvektoren bestimmt werden.

Ferner repräsentiert in der zweidimensionalen Darstellung die Länge des zweiten Balkens für die jeweilige zweite Zustandsvariable und den jeweiligen Zustandsbereich die Anzahl von zweiten Zustandsvektoren oder eine aus den Betriebszeitpunkten der zweiten Zustandsvektoren abgeleitete Auftretenszeitspanne für die Anzahl von zweiten Zustandsvektoren, wobei die zweiten Zustandsvektoren alle Zustandsvektoren sind, welche dem jeweiligen Zustandsbereich zugeordnet sind und die jeweilige zweite Zustandsvariable enthalten und für welche ferner der Zustandswert der zweiten Zustandsvariablen das Schwellwertkriterium nicht erfüllt.

Mit dem erfindungsgemäßen Verfahren wird eine aussagekräftige Darstellung in der Form von Balkendiagrammen erreicht, wobei jedes Balkendiagramm durch entsprechende Positionierung intuitiv einem Zustandsbereich im Raum der Zustandswerte der ersten Zustandsvariablen zugeordnet wird. Die Balkendiagramme vermitteln auf einfache Weise die Gesamtanzahl von aufgetretenen Zuständen im entsprechenden Zustandsbereich sowie die Information, ob kritische Zustände eingenommen wurden.

In einer bevorzugten Ausführungsform sind die jeweiligen Zustandsbereiche, die in der zweidimensionalen Darstellung enthalten sind, aneinander angrenzende Rechtecke. Nichtsdestotrotz können die Zustandsbereiche ggf. auch eine andere Form aufweisen. Im Besonderen korrelieren die Zustandsbereiche mit vorgegebenen Betriebsbereichen des technischen Systems, wie z.B. dem Hochfahren, dem Konstantbetrieb und dem Herunterfahren einer Maschine.

In einer weiteren bevorzugten Ausgestaltung des erfindungsgemäßen Verfahrens sind in jedem Balkendiagramm der oder die ersten Balken in Bezug auf eine Achse des kartesischen Koordinatensystems und insbesondere in Bezug auf eine vertikale Achse gegenüber dem oder den zweiten Balken versetzt. In einer weiteren Ausgestaltung erstrecken sich alle ersten und zweiten Balken in deren Längsrichtung parallel zu der gleichen Achse des kartesischen Koordinatensystems, wobei die Achse vorzugsweise die vertikale Achse ist. Mit den beiden soeben beschriebenen Ausführungsformen wird eine einfach aufgebaute und gut verständliche Balkendarstellung erreicht.

In einer weiteren bevorzugten Ausführungsform umfasst ein jeweiliges Schwellwertkriterium einen unteren Schwellwert und einen oberen Schwellwert für Zustandswerte einer jeweiligen zweiten Zustandsvariablen im jeweiligen Zustandsbereich, wobei das Schwellwertkriterium dann erfüllt ist, wenn der Zustandswert der jeweiligen zweiten Zustandsvariablen zwischen dem unteren und oberen Schwellwert liegt.

In einer bevorzugten Ausgestaltung der obigen Ausführungsform ist ein jeweiliger zweiter Balken zumindest eines Teils und insbesondere aller zweiter Balken in der zweidimensionalen Darstellung an einer Grundlinie angeordnet, wobei die Grundlinie für jeden Balken ggf. unterschiedlich gewählt sein kann. Dabei werden durch den Balkenabschnitt auf einer Seite der Grundlinie zweite Zustandsvektoren mit Zustandswerten der jeweiligen zweiten Zustandsvariablen unterhalb des unteren Schwellwerts repräsentiert, wohingegen durch den Balkenabschnitt auf der anderen Seite der Grundlinie zweite Zustandsvektoren mit Zustandswerten der jeweiligen zweiten Zustandsvariablen oberhalb des oberen Schwellwerts repräsentiert werden. Mit dieser Ausführungsform wird einfach und intuitiv das Überschreiten und Unterschreiten entsprechender Schwellwerte im jeweiligen Zustandsbereich angezeigt.

Die Grundlinien verlaufen vorzugsweise parallel zu einer Achse des kartesischen Koordinatensystems und insbesondere zu einer horizontalen Achse. In diesem Fall erstreckt sich die Längsrichtung der zweiten Balken von der Grundlinie aus in Richtung der anderen Achse des kartesischen Koordinatensystems. Vorzugsweise weisen die Balkenabschnitte auf den unterschiedlichen Seiten der Grundlinie verschiedene Farben auf, so dass diese gut unterschieden werden können.

In einer weiteren bevorzugten Ausführungsform wird in der zweidimensionalen Darstellung die gleiche Grundlinie für alle zweiten Balken innerhalb eines Balkendiagramms verwendet, wodurch eine kompakte Darstellung des Balkendiagramms ermöglicht wird.

In einer weiteren Ausgestaltung sind in allen Balkendiagrammen, die in der zweidimensionalen Darstellung entlang einer Achse des kartesischen Koordinatensystems nebeneinander liegen, die Grundlinien an der gleichen Position in Bezug auf die andere Achse des kartesischen Koordinatensystems angeordnet.

In einer weiteren Ausgestaltung erstrecken sich in allen Balkendiagrammen, die in der zweidimensionalen Darstellung entlang einer Achse des kartesischen Koordinatensystems nebeneinander liegen, die ersten Balken in deren Längsrichtung entlang der anderen Achse des kartesischen Koordinatensystems und sie beginnen an der gleichen Position in Bezug auf die andere Achse. Hierdurch wird eine besonders übersichtliche Darstellung der ersten Balken in den Balkendiagrammen erreicht.

In einer weiteren, besonders bevorzugten Ausführungsform wird durch die Füllung eines jeweiligen zweiten Balkens zumindest eines Teils und insbesondere aller zweiter Balken in der zweidimensionalen Darstellung das Ausmaß der Abweichung der Zustandswerte der zweiten Zustandsvektoren im entsprechenden Zustandsbereich vom Schwellwertkriterium repräsentiert. Insbesondere wird dabei das Ausmaß der Abweichung durch die Farbsättigung oder die Helligkeit oder die Farbe der Füllung repräsentiert. Mit dieser Ausführungsform wird somit über die Füllung der Balken eine weitere Information im Hinblick auf das Ausmaß der Abweichung codiert.

In einer bevorzugten Variante, bei der das Schwellwertkriterium einen oberen und einen unteren Schwellwert umfasst, entspricht das Ausmaß der Abweichung für zweite Zustandsvektoren mit Zustandswerten der jeweiligen zweiten Zustandsvariable unterhalb des unteren Schwellwerts der Summe der betragsmäßigen Differenzen dieser Zustandswerte zum unteren Schwellwert oder das Ausmaß hängt von dieser Summe ab. Alternativ oder zusätzlich entspricht das Ausmaß der Abweichung für zweite Zustandsvektoren mit Zustandswerten der jeweiligen zweiten Zustandsvariablen oberhalb des oberen Schwellwerts der Summe der betragsmäßigen Differenzen dieser Zustandswerte zum oberen Schwellwert oder das Ausmaß hängt von dieser Summe ab. Diese Ausführungsform stellt eine einfache Berechnungsmethodik für das genannte Ausmaß bereit.

In einer besonders bevorzugten Ausführungsform des erfindungsgemäßen Verfahrens ermöglicht die Benutzerschnittstelle eine Befehlseingabe durch einen Benutzer, wobei die Befehlseingabe die Wiedergabe einer Detailansicht auf der Anzeige der Benutzerschnittstelle für Zustandswerte einer zweiten Zustandsvariablen für einen oder mehrere Zustandsbereiche auslöst. Die Befehlseingabe kann beispielsweise durch einen über eine Computermaus bedienten Cursor auf der Anzeige bewirkt werden, wobei über die Cursorposition und eine Interaktion an der Maus entsprechende Zustandsbereiche, für welche der Benutzer Detailinformationen wünscht, markiert werden können. Sollten die entsprechenden Zustandsbereiche mehrere zweite Zustandsvariablen enthalten, werden entweder mehrere Detailansichten für die jeweiligen Zustandsvariablen erzeugt oder der Benutzer kann vorab spezifizieren, für welche zweite Zustandsvariable er eine Detailansicht wünscht.

In einer bevorzugten Ausführungsform umfasst die Detailansicht ein zweidimensionales Diagramm mit einer Zeitachse und einer dazu senkrechten, die Zustandswerte der jeweiligen zweiten Zustandsvariablen repräsentierenden Achse, wobei das zweidimensionale Diagramm die Zustandswerte der jeweiligen zweiten Zustandsvariablen der Zustandsvektoren, die dem einen oder den mehreren Zustandsbereichen zugeordnet sind, als Datenpunkte in Abhängigkeit von den Betriebszeitpunkten des Auftretens der Zustandswerte im vorgegebenen Betriebsintervall wiedergibt. Hierdurch erhält ein Benutzer weitergehende Informationen über die zeitliche Entwicklung der Werte von zweiten Zustandsvariablen. Gegebenenfalls kann in dem zweidimensionalen Diagramm auch der zumindest eine Schwellwert, insbesondere der oben definierte untere und obere Schwellwert, des Schwellwertkriteriums als Linie bzw. Linien wiedergegen werden.

In einer weiteren bevorzugten Variante sind entlang der Zeitachse benachbarte Datenpunkte zumindest teilweise über Linien miteinander verbunden, wodurch sehr gut die zeitliche Entwicklung der Datenpunkte erkennbar wird. Darüber hinaus sind in einer weiteren Ausgestaltung die Datenpunkte für unterschiedliche Zustandsbereiche in dem zweidimensionalen Diagramm verschieden dargestellt, so dass die Zustandsbereiche unterscheidbar sind.

In einer weiteren Variante des erfindungsgemäßen Verfahrens ermöglicht die Benutzerschnittstelle eine Befehlseingabe durch einen Benutzer, mit der das Schwellwertkriterium angepasst wird. Ein Benutzer kann dabei insbesondere die entsprechenden Schwellwerte des Schwellwertkriteriums neu festlegen.

In einer bevorzugten Ausführungsform wird das erfindungsgemäße Verfahren während des Betriebs des technischen Systems durchgeführt. In diesem Fall stellt das vorgegebene Betriebsintervall eine vorgegebene Zeitspanne vom aktuellen Zeitpunkt in die Vergangenheit dar. Dabei kann in regelmäßigen Zeitabständen die entsprechende zweidimensionale Darstellung bzw. die daraus abgeleitete Detailansicht aktualisiert werden.

Bei Verwendung des erfindungsgemäßen Verfahrens während des Betriebs des technischen Systems ermöglicht die Benutzerschnittstelle in einer bevorzugten Variante eine Befehlseingabe durch einen Benutzer, welche die Veränderung einer oder mehrerer Stellgrößen im technischen System während des Betriebs wirkt.

Das erfindungsgemäße Verfahren kann für beliebige technische Systeme zum Einsatz kommen. Insbesondere kann das technische System einen Elektromotor, z.B. für eine Kohlemühle in einem Kraftwerk oder zum Zerkleinern von Gestein in einer Mine oder für ein Förderband, und/oder eine Gasturbine, insbesondere zur elektrischen Energieerzeugung, und/oder einen Schütz umfassen.

Ferner können die Betriebsdaten bzw. die ersten und zweiten Zustandsvariablen sehr unterschiedliche Größen sein. Vorzugsweise umfassen die Betriebsdaten und/oder die ersten Zustandsvariablen und/oder die Anzahl von zweiten Zustandsvariablen eine oder mehrere der folgenden Größen:
- eine (zugeführte und abgegebene) elektrische Leistung einer Komponente des technischen Systems, wie z.B. eines Elektromotors oder einer Gasturbine, wobei hier und im Folgenden eine Komponente auch das gesamte technische System bezeichnen kann;
- eine Drehzahl einer Komponente des technischen Systems, wie z.B. eines Elektromotors oder einer Gasturbine;
- ein Drehmoment einer Komponente des technischen Systems, wie z.B. eines Elektromotors oder einer Gasturbine;
- eine Temperatur an einer Stelle im technischen System;
- einen elektrischen Strom in einer Komponente des technischen Systems;
- eine elektrische Spannung in einer Komponente des technischen Systems;
- eine Verschleißkennzahl einer Komponente des technischen Systems;
- eine Anzahl von Schaltvorgängen pro Zeitintervall einer Komponente des technischen Systems, wie z.B. eines Schutzes.

Neben dem oben beschriebenen Verfahren betrifft die Erfindung eine Vorrichtung zur rechnergestützten Verarbeitung von Betriebsdaten eines technischen Systems, wobei die Betriebsdaten während des Betriebs des technischen Systems in einem vorgegebenen Betriebsintervall erfasst worden sind und als digitale Daten in einem Speicher hinterlegt sind. Die Vorrichtung ist dabei derart ausgestaltet, dass mit der Vorrichtung das erfindungsgemäße Verfahren bzw. eine oder mehrere bevorzugte Varianten des erfindungsgemäßen Verfahrens durchführbar sind. Mit anderen Worten beinhaltet die Vorrichtung eine Benutzerschnittstelle mit einer Anzeige sowie ein entsprechendes Rechnermittel, welches die oben beschriebene Visualisierung auf der Anzeige der Benutzerschnittstelle generiert.

Ferner umfasst die Erfindung ein Computerprogrammprodukt mit einem auf einem maschinenlesbaren Träger gespeicherten Programmcode zur Durchführung des erfindungsgemäßen Verfahrens bzw. einer oder mehrerer bevorzugter Varianten des erfindungsgemäßen Verfahrens, wenn der Programmcode auf einem Computer ausgeführt wird. Die Erfindung betrifft darüber hinaus ein Computerprogramm mit einem Programmcode zur Durchführung des erfindungsgemäßen Verfahrens bzw. einer oder mehrerer bevorzugter Varianten des erfindungsgemäßen Verfahrens, wenn der Programmcode auf einem Computer ausgeführt wird.

Ein Ausführungsbeispiel der Erfindung wird nachfolgend anhand der beigefügten Figuren detailliert beschrieben.

Es zeigen:
- Fig. 1: einen schematischen Ablaufplan, der die Durchführung einer Variante des erfindungsgemäßen Verfahrens verdeutlicht;
- Fig. 2: eine Wiedergabe einer zweidimensionalen Darstellung, wie sie in einer Ausführungsform der Erfindung auf der Anzeige einer Benutzerschnittstelle erscheint;
- Fig. 3: eine Wiedergabe einer zweidimensionalen Darstellung, wie sie in einer anderen Ausführungsform der Erfindung auf der Anzeige einer Benutzerschnittstelle erscheint;
- Fig. 4 und Fig. 5: zwei Detailansichten, die ein Benutzer für Zustandsbereiche aus der Darstellung der Fig. 2 erzeugen kann.

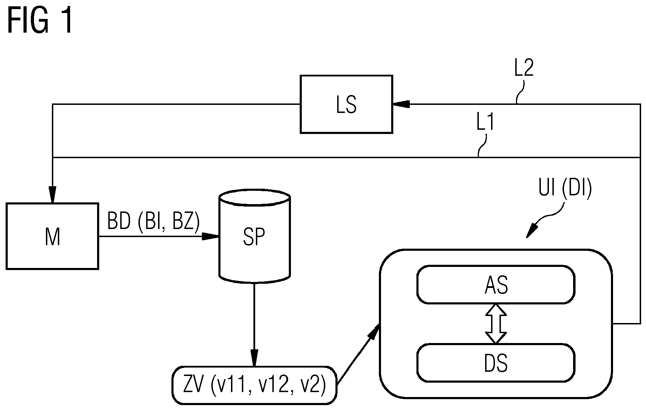

Fig. 1 zeigt in schematischer Darstellung den Ablauf einer Variante des erfindungsgemäßen Verfahrens. Diese Variante wird online während des Betriebs eines technischen Systems in der Form einer Maschine M, wie z.B. eines Elektromotors, durchgeführt.

Im Rahmen des Betriebs der Maschine M werden Betriebsdaten BD zu vorgegebenen Betriebszeitpunkten BZ innerhalb eines Betriebsintervalls BI erfasst. Das Betriebsintervall ist dabei eine vorgegebene Zeitspanne ausgehend vom aktuellen Zeitpunkt in die Vergangenheit. Die Betriebsdaten werden in einem geeigneten Speicher SP als digitale Daten hinterlegt und basierend auf diesen Betriebsdaten wird das erfindungsgemäße Verfahren durchgeführt. Das Verfahren kann dabei ggf. auch offline für einen vergangenen Betrieb der Maschine durchgeführt werden, sofern für den vergangenen Betrieb entsprechende Betriebsdaten in dem Speicher SP hinterlegt wurden. Die Betriebsdaten können beliebige, während des Betriebs der Maschine auftretende Größen umfassen, die in geeigneter Weise z.B. mittels Sensoren erfasst wurden bzw. aus Sensordaten abgeleitet wurden.

Im Verfahren der Fig. 1 werden rechnergestützt zunächst Zustandsvektoren ZV für die jeweiligen Betriebszeitpunkte BZ aus den Betriebsdaten BD extrahiert. Ein Zustandsvektor enthält zwei Zustandswerte für ein Paar von ersten Zustandsvariablen v11 und v12 sowie einen Zustandswert v2 für eine zweite Zustandsvariable. Die Zustandswerte der ersten Zustandsvariablen und der zweiten Zustandsvariablen können dabei Datenwerte aus den Betriebsdaten sein, sie können jedoch auch zumindest teilweise aus Datenwerten der Betriebsdaten berechnet sein. Zum Beispiel kann eine erste Zustandsvariable der Drehzahl eines Elektromotors und die andere erste Zustandsvariable die dem Elektromotor zugeführte Leistung entsprechen. Demgegenüber kann die zweite Zustandsvariable beispielsweise eine Temperatur darstellen, die innerhalb des Elektromotors erfasst wird. Die Betriebsdaten bzw. die Zustandsvariablen können auch beliebige andere Größe betreffen, wobei entsprechende Beispiele von solchen Größen bereits im Vorangegangenen gegeben wurden.

In einem nächsten Schritt wird rechnergestützt auf einem geeigneten Display DI einer Benutzerschnittstelle UI eine zweidimensionale Darstellung in Form einer Aggregationsansicht AS erzeugt. Diese Visualisierung stellt ein Kernelement der Erfindung dar und vermittelt einem Benutzer auf einfache Weise die Korrelation zwischen dem Paar von ersten Zustandsvariablen und der zweiten Zustandsvariablen sowie eine Abweichung der zweiten Zustandsvariablen von einem Normbereich. Über eine geeignete Interaktion an der Benutzerschnittstelle UI kann sich der Benutzer ferner geeignete Detailansichten DS aus der Aggregationsansicht AS generieren, wie weiter unten noch näher erläutert wird.

Aus den über die Aggregationsansicht AS und die Detailansichten DS vermittelten Informationen kann der Benutzer geeignete Schlüsse ziehen. In einer Variante kann er direkt über die Benutzerschnittstelle UI Steuerbefehle an der Maschine M geben, wie durch die Linie L1 angedeutet ist. Ebenso kann der Benutzer seine Erkenntnisse auch an eine andere Stelle, wie z.B. an ein Leitsystem LS, weiterleiten, wie durch die Linie L2 angedeutet ist. Das Leitsystem kann dann in geeigneter Weise auf den Betrieb der Maschine M einwirken.

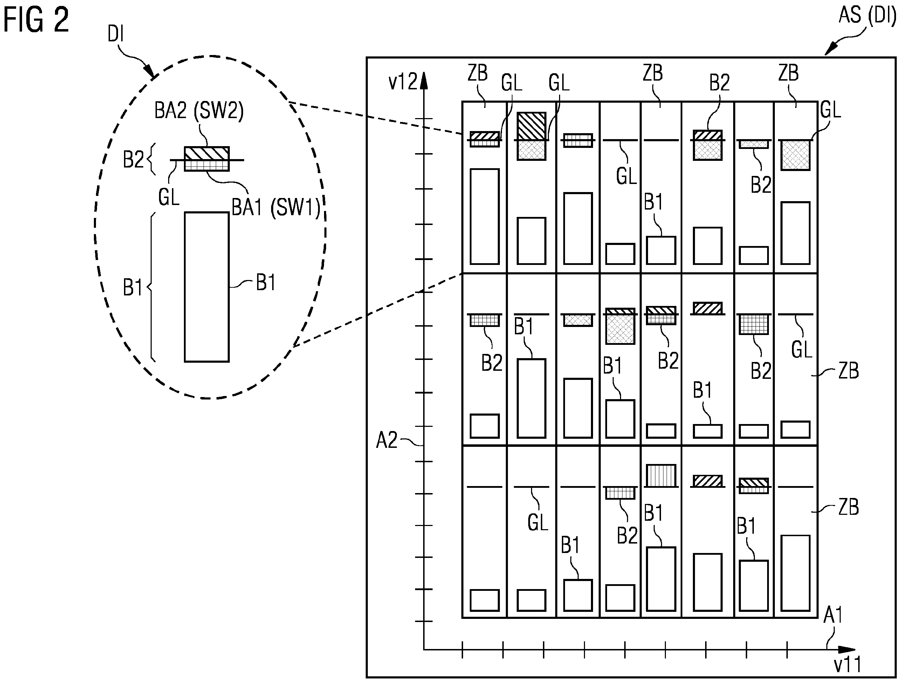

Fig. 2 zeigt beispielhaft eine Aggregationsansicht AS, die auf einem entsprechenden Display DI basierend auf dem Verfahren der Fig. 1 generiert wird. Die Fläche des Displays entspricht dabei der Blattebene der Fig. 2. Die in der Aggregationsansicht wiedergegebenen Bezugszeichen dienen zur Erleichterung der Beschreibung dieser Ansicht und sind (bis auf die Bezugszeichen v11 und v12) nicht Bestandteil der Ansicht. Die Aggregationsansicht AS der Fig. 2 stellt den Raum der Datenpunkte dar, welche durch die Zustandswerte der beiden ersten Zustandsvariablen v11 und v12 repräsentiert sind. Dieser Raum wird durch ein kartesisches Koordinatensystem mit der horizontalen Achse A1 und der vertikalen Achse A2 repräsentiert. Die Skala der Achse A1 gibt dabei Werte der ersten Zustandsvariablen v11 wieder. Analog gibt die Skala der Achse A2 Zustandswerte der ersten Zustandsvariablen v12 wieder. Zur Bezeichnung der Zustandsvariablen müssen dabei nicht die Bezugszeichen v11 bzw. v12 genutzt werden, sondern eine entsprechende Zustandsvariable kann stattdessen in textueller Form, z.B. mit dem Text "Drehzahl" bzw. "Leistung", spezifiziert werden. Gegebenenfalls können die Achsen A1 und A2 sowie die Bezeichnung der Zustandsvariablen in der Aggregationsansicht AS auch weggelassen werden.

Die Aggregationsansicht AS enthält eine Vielzahl von Zustandsbereichen ZB, welche aus Übersichtlichkeitsgründen nur teilweise mit diesem Bezugszeichen bezeichnet sind. Die Zustandsbereiche stellen dabei aneinander angrenzende längliche Rechtecke dar, wobei die Aggregationsansicht insgesamt drei Zeilen solcher Rechtecke mit jeweils acht Rechtecken umfasst. Das heißt, die Aggregationsansicht AS enthält insgesamt 24 Rechtecke bzw. Zustandsbereiche ZB. Jedes Rechteck repräsentiert einen Ausschnitt aus dem Raum der Datenpunkte der Paare von ersten Zustandsvariablen. Eine geeignete Aufteilung in diese Zustandsbereiche wird in der Regel von einem Domänenexperten festgelegt. Vorzugsweise entspricht dabei jeder Zustandsbereich einem Betriebsregime des technischen Systems. Die Zustandsbereiche ZB müssen nicht zwangsläufig rechteckig ausgestaltet sein, sondern sie können je nach Betriebsregime auch eine andere Formgebung aufweisen.

In den jeweiligen Zustandsbereichen ZB werden in der Aggregationsansicht AS jeweils ein erster Balken B1 und ein zweiter Balken B2 wiedergegeben. Die ersten Balken B1 sind in Fig. 2 weiß dargestellt, weisen jedoch in der Regel eine vorgegebene Farbe, wie z.B. grau, auf. Alle Balken B1 haben dabei die gleiche Farbe. Aus Übersichtlichkeitsgründen sind nur einige dieser Balken mit dem Bezugszeichen B1 versehen. Ferner ist in jedem Zustandsbereich ZB oberhalb des Balkens B1 eine Grundlinie GL angeordnet, an der ein zweiter Balken B2 positioniert ist. In einigen Zustandsbereichen ZB sind zwar explizit keine zweiten Balken zu sehen, jedoch ist dies im Rahmen der Erfindung so zu verstehen, dass ein zweiter Balken mit der Höhe Null vorhanden ist, was durch die alleinige Wiedergabe der Grundlinie GL vermittelt wird. Ebenso kann ggf. ein erster Balken B1 mit der Höhe Null in einem entsprechenden Zustandsbereich ZB auftreten. Ein erster Balken mit der Höhe Null wird dabei dadurch wiedergegeben, dass der entsprechende Bereich, in dem sich ansonsten ein erster Balken mit einer Höhe ungleich Null befindet, leer ist.

Die jeweiligen zweiten Balken B2 bestehen aus einem unterhalb der Grundlinie GL liegenden Balkenbereich BA1, zu dem ein unterer Schwellwert SW1 gehört, sowie aus einem oberhalb der Grundlinie GL liegenden Balkenbereich BA2, zu dem ein oberer Schwellwert SW2 gehört. Dies wird aus der Detaildarstellung DE der Fig. 2 ersichtlich, welche den ersten und zweiten Balken des linken oberen Zustandsbereichs ZB vergrößert wiedergibt. Die Balkenbereiche BA1 und BA2 weisen eine andere Farbe als die Balken B1 auf. Dabei haben alle Balkenbereiche BA1 eine einheitliche Färbung. Ferner haben auch alle Balkenbereiche BA2 eine einheitliche Färbung, welche jedoch anders ist als die Färbung der Balkenbereiche BA1. Durch die verschiedenen Musterfüllungen der Balkenbereiche der Balken B2 wird in Fig. 2 angedeutet, dass die Farbsättigung der Balkenbereiche unterschiedlich sein kann, wobei über die Farbsättigung eine Information codiert wird, wie weiter unten noch näher erläutert wird.

Mittels der Balken B1 und der Balken B2 werden aggregierte Informationen zu den Zustandsvektoren bzw. Datenpunkten innerhalb des jeweiligen Zustandsbereichs ZB vermittelt. Die Länge eines jeweiligen Balkens B1 zeigt dabei an, wie viele Datenpunkte, d.h. Paare von Zustandswerten der ersten Zustandsvariablen v11 und v12, innerhalb des entsprechenden Zustandsbereichs liegen. Demgegenüber zeigt die Länge des Balkenbereichs BA1 des Balkens B2 an, wie viele Zustandsvektoren im entsprechenden Zustandsbereich ZB Zustandswerte der zweiten Zustandsvariablen v2 enthalten, die unterhalb des unteren Schwellwerts SW1 liegen. Analog zeigt die Länge des Balkenabschnitts BA2 an, wie viele Zustandsvektoren im entsprechenden Zustandsbereich ZB Zustandswerte der zweiten Zustandsvariablen v2 enthalten, die oberhalb des oberen Schwellwerts SW2 liegen. Mit anderen Worten gibt die Länge des Balkenabschnitts BA1 die Anzahl von Zustandsvektoren mit Koordinaten v11 und v12 im entsprechenden Zustandsbereich ZB sowie einer Koordinate v2 an, die den Schwellwert SW1 unterschreitet. Analog gibt der Balkenbereich BA2 die Anzahl von Zustandsvektoren mit Koordinaten v11 und v12 im Bereich ZB sowie einer Koordinate v2 an, die den Schwellwert SW2 überschreitet.

Wie bereits oben erwähnt, wird durch die Farbsättigung der Farbabschnitte BA1 bzw. BA2 eine weitere Information codiert. Diese Information gibt an, wie stark die Zustandswerte der zweiten Zustandsvariablen von der entsprechenden unteren bzw. oberen Schwelle abweichen. Mit anderen Worten gibt die Farbsättigung eines unteren Balkenabschnitts BA1 an, wie stark die mit diesem Balkenabschnitt korrelierten Zustandswerte der zweiten Zustandsvariablen von dem unteren Schwellwert abweichen, und die Farbsättigung eines oberen Balkenabschnitt BA2 gibt an, wie stark die mit diesem Balkenabschnitt korrelierten Zustandswerte der zweiten Zustandsvariablen von dem oberen Schwellwert abweichen. Die Stärke der Abweichung kann z.B. durch die kumulierte Summe der betragsmäßigen Differenzen zwischen den Zustandswerten und den entsprechenden Schwellwerten repräsentiert werden. In einer bevorzugten Variante repräsentiert dabei eine starke Farbsättigung eine größere Abweichung der Zustandswerte vom oberen bzw. unteren Schwellwert.

Mit der soeben beschriebenen Balkendarstellung werden einem Benutzer auf einfache Weise aggregierte Informationen zu den Zustandsvektoren im entsprechenden Zustandsbereich ZB und damit im entsprechenden Betriebsregime vermittelt. Der Benutzer kann dabei auch immer das Betriebsregime durch die Wiedergabe des zweidimensionalen Zustandsraums der Zustandsvariablen v11 und v12 erkennen. Gleichzeitig erhält er intuitiv die Information, ob entsprechende Schwellwerte unterschritten bzw. überschritten wurden. Die Schwellwerte sind dabei so festgelegt, dass Ausreißer unterhalb bzw. oberhalb der Schwellwerte einem Betrieb entsprechen, der nicht dem Normalbetrieb des technischen Systems entspricht und somit als kritisch einzustufen ist. Demzufolge wird einem Benutzer auf einfache Weise vermittelt, in welchen Betriebsregimes kritische Zustände auftreten. Darüber hinaus vermittelt die Aggregationsansicht auch intuitiv über eine Farbsättigung die Information, ob die aufgetretenen Abweichungen der Zustandswerte im jeweiligen Zustandsbereich sehr groß sind.

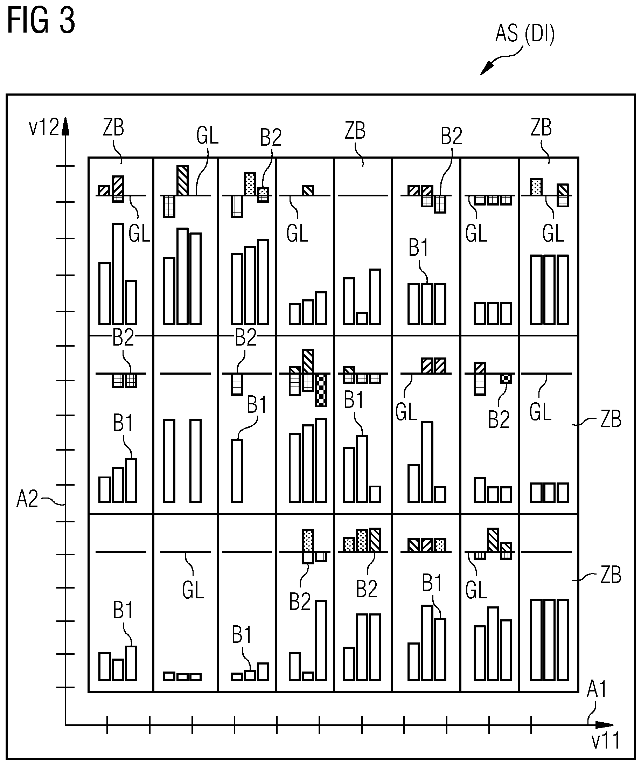

Fig. 3 zeigt eine abgewandelte Variante der Erzeugung einer Aggregationsansicht AS basierend auf dem erfindungsgemäßen Verfahren. In dieser abgewandelten Variante werden aus den Betriebsdaten BD der Maschine M neben den Zustandswerten der ersten Zustandsvariablen v11 und v12 nunmehr Zustandswerte von mehreren zweiten Zustandsvariablen extrahiert. Im Falle der Fig. 3 werden dabei pro Zustandsbereich ZB drei zweite Zustandsvariablen betrachtet. Mit anderen Worten unterscheidet sich die Aggregationsansicht der Fig. 3 von der Fig. 2 dahingehend, dass pro Zustandsbereich ZB nicht mehr ein Paar aus einem ersten und zweiten Balken, sondern drei Paare aus einem ersten und zweiten Balken vorhanden sind. Die Balken eines jeweiligen Paars gehören dabei zu einer anderen zweiten Zustandsvariablen.

Die Länge eines Balkens B1 gibt in Fig. 3 die Anzahl aller Zustandsvektoren für den Bereich ZB an, die einen Zustandswert für die entsprechende zweite Zustandsvariable enthalten. Dabei ist zu beachten, dass einem Datenpunkt bzw. Zustandsvektor nicht zwangsläufig immer Zustandswerte für alle drei zweiten Zustandsvariablen zugeordnet sein müssen. Insbesondere können für einige Datenpunkte auch nur Zustandswerte für eine oder zwei zweite Zustandsvariablen existieren, sofern im entsprechenden Betriebszeitpunkt nicht für alle zweiten Zustandsvariablen Zustandswerte (z.B. wegen fehlender Messungen) bestimmt wurden.

In Analogie zu Fig. 2 gibt die Länge eines zweiten Balkens B2 in einem jeweiligen Zustandsbereich ZB der Fig. 3 für die entsprechende zweite Zustandsvariable an, bei wie vielen Zustandsvektoren der Zustandswert der zweiten Zustandsvariablen einen unteren Schwellwert unterschritten hat (unterer Balkenbereich BA1) bzw. einen oberen Schwellwert überschritten hat (oberer Balkenbereich BA2). Im Übrigen entspricht die Darstellung der Fig. 3 der Darstellung der Fig. 2, d.h. es wird wieder der Raum der Datenpunkte gemäß den Paaren von Zustandsvariablen v11 und v12 in dem kartesischen Koordinatensystem der Achsen A1 und A2 wiedergegeben, wobei entsprechende Zustandsbereiche ZB durch Rechtecke dargestellt sind. Ebenso weisen die Balken B1 eine einheitliche Farbe auf, welche sich von den Farben der Balkenabschnitte BA1 und BA2 unterscheidet. Über die unterschiedliche Farbsättigung der Balkenabschnitte wird wiederum angezeigt, wie stark die Abweichung der Zustandswerte der entsprechenden zweiten Zustandsvariablen vom unteren Schwellwert SW1 bzw. vom oberen Schwellwert SW2 ist.

In den hier beschriebenen Ausführungsformen kann ein Benutzer über eine geeignete Interaktion an der Benutzerschnittstelle UI eine oder mehrere Zustandsbereiche ZB aus der Aggregationsansicht AS auswählen und hierfür entsprechende Detailansichten DS generieren. Diese Auswahl kann z.B. mit Hilfe eines durch eine Computermaus bedienten Cursors auf der Aggregationsansicht AS erfolgen, worüber bestimmte Zustandsbereiche ZB markiert werden können.

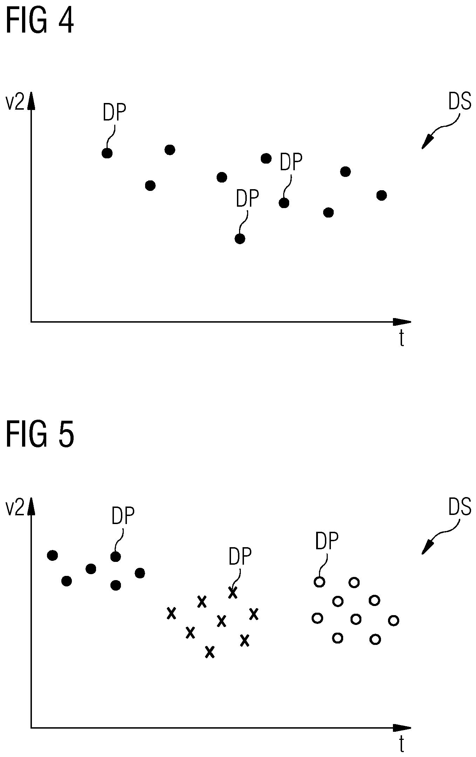

Fig. 4 und Fig. 5 zeigen Beispiele von Detailansichten DS, welche sich aus der Markierung entsprechender Zustandsbereiche in der Aggregationsansicht AS der Fig. 2 ergeben. Die Darstellungen der Fig. 4 und Fig. 5 sollen dabei lediglich das Prinzip der Detailwiedergabe verdeutlichen. In einer realen Detailansicht ist in der Regel eine wesentlich größere Anzahl der im Folgenden beschriebenen Datenpunkte DP enthalten. Ferner sind in der realen Detailansicht nicht die Bezugszeichen DP vorhanden.

In den Detailansichten DS ist entlang der Abszisse die Zeit t innerhalb des betrachteten Betriebsintervalls BI wiedergegeben. Demgegenüber gibt die Ordinate v2 Zustandswerte der zweiten Zustandsvariablen an. Fig. 4 zeigt den Fall, bei dem nur ein Zustandsbereich ZB aus der Aggregationsansicht AS ausgewählt wurde. Über Datenpunkte DP, die als schwarze Punkte dargestellt sind, wird die zeitliche Entwicklung der Zustandswerte der zweiten Zustandsvariablen angezeigt. Aus Übersichtlichkeitsgründen sind nur einige der Datenpunkte mit dem Bezugszeichen DP versehen. Ein jeweiliger Datenpunkt DP zeigt durch seinen Wert entlang der Abszisse den Betriebszeitpunkt an, an dem der entsprechende Zustandswert der zweiten Zustandsvariablen aufgetreten ist, wohingegen sein Wert entlang der Ordinate den entsprechenden Zustandswert der zweiten Zustandsvariablen angibt. Die Abszisse und die Ordinate enthalten dabei eine entsprechende Skala, die aus Übersichtlichkeitsgründen nicht wiedergegeben ist.

Fig. 5 zeigt eine Detailansicht DS analog zu Fig. 4, wobei nunmehr durch den Benutzer mehrere Zustandsbereiche ZB, nämlich insgesamt drei Zustandsbereiche, in der Aggregationsansicht AS ausgewählt wurden. Für die jeweiligen Zustandsbereiche sind wiederum die entsprechenden Zustandswerte der zweiten Zustandsvariablen durch Datenpunkte DP gekennzeichnet, die nur teilweise mit diesem Bezugszeichen versehen sind. Dabei existieren drei unterschiedliche Typen von Datenpunkten. Zum einen gibt es Datenpunkte, die analog zu Fig. 4 aus schwarzen Punkten bestehen. Zum anderen gibt es Datenpunkte, die durch Kreuze repräsentiert werden, sowie Datenpunkte, die weiße Punkte sind.

Die unterschiedlichen Arten von Datenpunkten korrespondieren mit verschiedenen Zustandsbereichen, die vom Benutzer ausgewählt wurden. Hierdurch wird dem Benutzer vermittelt, zu welchem Zustandsbereich die entsprechenden Datenpunkte gehören. In dem beispielhaften Szenario der Fig. 5 entsprechen unterschiedliche Zustandsbereiche auch unterschiedlichen Betriebszeiten der Maschine, denn die unterschiedlichen Datenpunkte liegen entlang unterschiedlicher Abschnitte der Zeitachse t. Verschiedenartige Datenpunkte können auch auf andere Weise als wie in Fig. 5 generiert werden. Insbesondere können zu unterschiedlichen Zustandsbereichen gehörige Datenpunkte durch verschiedene Farben angezeigt werden.

In den Detailansichten der Fig. 4 und Fig. 5 können zusätzlich auch der entsprechende untere und obere Schwellwert für die jeweilige Zustandsvariable im entsprechenden Zustandsbereich angezeigt werden. Dies erfolgt insbesondere durch die Wiedergabe einer horizontal verlaufenden Linie auf der Höhe des oberen bzw. unteren Schwellwerts. Gegebenenfalls besteht ferner die Möglichkeit, dass ein Benutzer in den jeweiligen Detailansichten die Schwellwerte anpassen kann, indem er die jeweilige horizontale Linie geeignet verschiebt. Eine Anpassung entsprechender Schwellwerte hat zur Folge, dass sich auch die Balkendarstellung in der Aggregationsansicht AS entsprechend anpasst.

Werden in einer Detailansicht mehrere Zustandsbereiche angezeigt, so sind die Schwellwerte in den unterschiedlichen Zustandsbereichen in der Regel unterschiedlich. Dies kann durch unterschiedlich wiedergegebene Linien bzw. durch Linien an unterschiedlichen Positionen in der entsprechenden Detailansicht erreicht werden.

Die im Vorangegangenen beschriebenen Ausführungsformen der Erfindung weisen eine Reihe von Vorteilen auf. Insbesondere wird eine effiziente Darstellung von Maschineninformationen in der Form von Balkendiagrammen in einem Zustandsraum eines Paars von Zustandsvariablen erreicht. Dabei werden Informationen sowohl zu Zustandswerten erster Zustandsvariablen als auch zu Zustandswerten zweiter Zustandsvariablen wiedergegeben, ohne dass zwischen mehreren Visualisierungen gewechselt werden muss. Ferner wird mehr Information auf weniger Platz wiedergegeben, was eine genauere Ablesung durch den Benutzer ermöglicht. Dies erleichtert die Optimierung des Maschineneinsatzes. Darüber hinaus wird einem Benutzer durch einen Wechsel in eine Detailansicht eine genauere Analyse von Parametern des entsprechenden Zustandsbereichs ermöglicht.

Im Unterschied zu herkömmlichen Darstellungen (z.B. Heatmaps) wird eine Anzahl von Datenpunkten auf eine Balkenlänge abgebildet. Ein Nutzer kann dabei Längenunterschiede viel genauer als Farbton- bzw. Helligkeitsunterschiede wahrnehmen. Dies führt zu einer genaueren Ablesung der Informationen. Durch die Ausrichtung der ersten und zweiten Balken zueinander wird ein genauerer Vergleich zwischen verschiedenen Zustandsbereichen ermöglicht. Darüber hinaus wird das Ausmaß bzw. die Signifikanz von Ausreißern unterhalb bzw. oberhalb von Schwellwerten über die Farbsättigung der entsprechenden Balken angezeigt.

## Patentansprüche

1. Verfahren zur rechnergestützten Verarbeitung von Betriebsdaten (BD) eines technischen Systems (M), wobei die Betriebsdaten (BD) während des Betriebs des technischen Systems (M) in einem vorgegebenen Betriebsintervall (BI) erfasst worden sind und als digitale Daten in einem Speicher (SP) hinterlegt sind, wobei:
- aus den Betriebsdaten (BD) für eine Vielzahl von Betriebszeitpunkten (BZ) innerhalb des vorgegebenen Betriebsintervalls (BI) jeweils ein Zustandsvektor (ZV) extrahiert wird, der ein Paar von ersten Zustandsvariablen (v11, v12) mit zugeordneten Zustandswerten des technischen Systems (M) zum jeweiligen Betriebszeitpunkt (BZ) und zumindest eine zweite Zustandsvariable (v2) aus einer Anzahl von zweiten Zustandsvariablen (v2) mit zugeordneten Zustandswerten des technischen Systems (M) zum jeweiligen Betriebszeitpunkt (BZ) umfasst;
- eine zweidimensionale Darstellung (AS) auf einer Anzeige (DI) einer Benutzerschnittstelle (UI) generiert wird, wobei die Darstellung (AS) dem zweidimensionalen Raum der Zustandswerte der Paare von ersten Zustandsvariablen (v11, v12) der Zustandsvektoren (ZV) in einem kartesischen Koordinatensystem entspricht und in der Darstellung (AS) eine Vielzahl von aneinander angrenzenden Zustandsbereichen (ZB) wiedergegeben ist, wobei alle Zustandsvektoren (ZV) mit Zustandswerten von Paaren von ersten Zustandsvariablen (v11, v12) innerhalb eines jeweiligen Zustandsbereichs (ZB) diesem Zustandsbereich (ZB) zugeordnet sind und für die Zustandswerte jeder zweiten Zustandsvariablen (v2) der Zustandsvektoren (ZV), die dem jeweiligen Zustandsbereich (ZB) zugeordnet sind, ein Schwellwertkriterium umfassend zumindest einen Schwellwert definiert ist, wobei bei Erfüllung des Schwellwertkriteriums der entsprechende Zustandswert der jeweiligen zweiten Zustandsvariablen (v2) des Zustandsvektors (ZV) als normal für den Betrieb des technischen Systems (M) eingestuft wird;
- in einem jeweiligen Zustandsbereich (ZB) ein Balkendiagramm wiedergegeben wird, in dem zu jeder zweiten Zustandsvariablen (v2) ein erster Balken (B1) und ein zweiter Balken (B2) des Balkendiagramms gehört, wobei
- die Länge des ersten Balkens (B1) die Anzahl von ersten Zustandsvektoren oder eine aus den Betriebszeitpunkten (BZ) der ersten Zustandsvektoren abgeleitete Auftretenszeitspanne für die Anzahl von ersten Zustandsvektoren repräsentiert, wobei die ersten Zustandsvektoren alle Zustandsvektoren (ZV) sind, welche dem jeweiligen Zustandsbereich (ZB) zugeordnet sind und die jeweilige zweite Zustandsvariable (v2) enthalten, oder alle Zustandsvektoren (ZV) sind, die dem jeweiligen Zustandsbereich (ZB) zugeordnet sind und die jeweilige zweite Zustandsvariable (v2) enthalten und für welche ferner der Zustandswert der jeweiligen zweiten Zustandsvariablen (v2) das Schwellwertkriterium erfüllt;
- die Länge des zweiten Balkens (B2) die Anzahl von zweiten Zustandsvektoren oder eine aus den Betriebszeitpunkten (BZ) der zweiten Zustandsvektoren abgeleitete Auftretenszeitspanne für die Anzahl von zweiten Zustandsvektoren repräsentiert, wobei die zweiten Zustandsvektoren alle Zustandsvektoren (ZV) sind, welche dem jeweiligen Zustandsbereich (ZB) zugeordnet sind und die jeweilige zweite Zustandsvariable (v2) enthalten und für welche ferner der Zustandswert der zweiten Zustandsvariablen (v2) das Schwellwertkriterium nicht erfüllt,
wobei das Balkendiagramm die Gesamtanzahl von aufgetretenen Zuständen im entsprechenden Zustandsbereich sowie die Information, ob kritische Zustände eingenommen wurden, vermittelt.

2. Verfahren nach Anspruch 1, wobei die jeweiligen Zustandsbereiche (ZB) aneinander angrenzende Rechtecke sind.

3. Verfahren nach Anspruch 1 oder 2, wobei in jedem Balkendiagramm der oder die ersten Balken (B1) in Bezug auf eine Achse (A2) des kartesischen Koordinatensystems gegenüber dem oder den zweiten Balken (B2) versetzt sind.

4. Verfahren nach einem der vorhergehenden Ansprüche, wobei sich alle ersten und zweiten Balken (B1, B2) in deren Längsrichtung parallel zu der gleichen Achse (A2) des kartesischen Koordinatensystems erstrecken.

5. Verfahren nach einem der vorhergehenden Ansprüche, wobei ein jeweiliges Schwellwertkriterium einen unteren Schwellwert (SW1) und einen oberen Schwellwert (SW2) für Zustandswerte einer jeweiligen zweiten Zustandsvariablen (v2) im jeweiligen Zustandsbereich (ZB) umfasst, wobei das Schwellwertkriterium dann erfüllt ist, wenn der Zustandswert der jeweiligen zweiten Zustandsvariablen (v2) zwischen dem unteren und oberen Schwellwert (SW1, SW2) liegt.

6. Verfahren nach Anspruch 5, wobei ein jeweiliger zweiter Balken (B2) zumindest eines Teils der zweiten Balken (B2) in der zweidimensionalen Darstellung (AS) an einer Grundlinie (GL) angeordnet ist, wobei durch den Balkenabschnitt (BA1) auf einer Seite der Grundlinie zweite Zustandsvektoren mit Zustandswerten der jeweiligen zweiten Zustandsvariablen (v2) unterhalb des unteren Schwellwerts (SW1) repräsentiert werden und durch den Balkenabschnitt (BA2) auf der anderen Seite der Grundlinie (GL) zweite Zustandsvektoren mit Zustandswerten der jeweiligen zweiten Zustandsvariablen (v2) oberhalb des oberen Schwellwerts (SW2) repräsentiert werden.

7. Verfahren nach Anspruch 6, wobei die Balkenabschnitte (BA1, BA2) auf den unterschiedlichen Seiten der Grundlinie (GL) verschiedene Farben aufweisen.

8. Verfahren nach Anspruch 6 oder 7, wobei in der zweidimensionalen Darstellung (AS) die gleiche Grundlinie (GL) für alle zweiten Balken (B2) innerhalb eines Balkendiagramms verwendet wird.

9. Verfahren nach einem der Ansprüche 6 bis 8, wobei in allen Balkendiagrammen, die in der zweidimensionalen Darstellung (AS) entlang einer Achse (A1) des kartesischen Koordinatensystems nebeneinander liegen, die Grundlinien (GL) an der gleichen Position in Bezug auf die andere Achse (A2) des kartesischen Koordinatensystems angeordnet sind.

10. Verfahren nach einem der vorhergehenden Ansprüche, wobei in allen Balkendiagrammen, die in der zweidimensionalen Darstellung (AS) entlang einer Achse (A1) des kartesischen Koordinatensystems nebeneinander liegen, sich die ersten Balken (B1) in deren Längsrichtung entlang der anderen Achse (A2) des kartesischen Koordinatensystems erstrecken und an der gleichen Position in Bezug auf die andere Achse (A2) beginnen.

11. Verfahren nach einem der vorhergehenden Ansprüche, wobei durch die Füllung eines jeweiligen zweiten Balkens (B2) zumindest eines Teils der zweiten Balken (B2) in der zweidimensionalen Darstellung (AS) das Ausmaß der Abweichung der Zustandswerte der zweiten Zustandsvektoren im entsprechenden Zustandsbereich (ZB) vom Schwellwertkriterium repräsentiert wird.

12. Verfahren nach Anspruch 11, wobei das Ausmaß der Abweichung durch die Farbsättigung oder die Helligkeit oder die Farbe der Füllung repräsentiert wird.

13. Verfahren nach Anspruch 11 oder 12 in Kombination mit Anspruch 5, wobei das Ausmaß der Abweichung für zweite Zustandsvektoren mit Zustandswerten der jeweiligen zweiten Zustandsvariablen (v2) unterhalb des unteren Schwellwerts (SW1) der Summe der betragsmäßigen Differenzen dieser Zustandswerte zum unteren Schwellwert (SW1) entspricht oder von dieser Summe abhängt und/oder wobei das Ausmaß der Abweichung für zweite Zustandsvektoren mit Zustandswerten der jeweiligen zweiten Zustandsvariablen (v2) oberhalb des oberen Schwellwerts (SW2) der Summe der betragsmäßigen Differenzen dieser Zustandswerte zum oberen Schwellwert (SW2) entspricht oder von dieser Summe abhängt.

14. Verfahren nach einem der vorhergehenden Ansprüche, wobei die Benutzerschnittstelle (UI) eine Befehlseingabe durch einen Benutzer ermöglicht, welche für eine oder mehrere zweite Zustandsvariablen jeweils die Wiedergabe einer Detailansicht (DS) auf der Anzeige (DI) für Zustandswerte der jeweiligen zweiten Zustandsvariablen (v2) für einen oder mehrere Zustandsbereiche (ZB) auslöst.

15. Verfahren nach Anspruch 14, wobei die Detailansicht (DS) ein zweidimensionales Diagramm mit einer Zeitachse und einer dazu senkrechten, die Zustandswerte der jeweiligen zweiten Zustandsvariablen (v2) repräsentierenden Achse umfasst, wobei das zweidimensionale Diagramm die Zustandswerte der jeweiligen zweiten Zustandsvariablen (v2) der Zustandsvektoren (ZV), die dem einen oder den mehreren Zustandsbereichen (ZB) zugeordnet sind, als Datenpunkte (DP) in Abhängigkeit von den Betriebszeitpunkten (BZ) des Auftretens der Zustandswerte im vorgegebenen Betriebsintervall (BI) wiedergibt.

16. Verfahren nach Anspruch 15, wobei entlang der Zeitachse benachbarte Datenpunkte (DP) zumindest teilweise über Linien miteinander verbunden sind.

17. Verfahren nach Anspruch 15 oder 16, wobei die Datenpunkte (DP) für unterschiedliche Zustandsbereiche (ZB) in dem zweidimensionalen Diagramm verschieden dargestellt sind.

18. Verfahren nach einem der vorhergehenden Ansprüche, wobei die Benutzerschnittstelle (UI) eine Befehlseingabe durch einen Benutzer ermöglicht, mit der das Schwellwertkriterium angepasst wird.

19. Verfahren nach einem der vorhergehenden Ansprüche, wobei das Verfahren während des Betriebs des technischen Systems (M) durchgeführt wird.

20. Verfahren nach Anspruch 19, wobei die Benutzerschnittstelle (UI) eine Befehlseingabe durch einen Benutzer ermöglicht, welche die Veränderung einer oder mehrerer Stellgrößen im technischen System (M) während des Betriebs bewirkt.

21. Verfahren nach einem der vorhergehenden Ansprüche, wobei das technische System (M) einen Elektromotor und/oder eine Gasturbine und/oder einen Schütz umfasst.

22. Verfahren nach einem der vorhergehenden Ansprüche, wobei die Betriebsdaten (BD) und/oder die ersten Zustandsvariablen (v11, v12) und/oder die Anzahl von zweiten Zustandsvariablen (v2) eine oder mehrere der folgenden Größen umfassen:
- eine elektrische Leistung einer Komponente des technischen Systems (M);
- eine Drehzahl einer Komponente des technischen Systems (M) ;
- ein Drehmoment einer Komponente des technischen Systems (M) ;
- eine Temperatur an einer Stelle im technischen System (M) ;
- einen elektrischen Strom in einer Komponente des technischen Systems (M);
- eine elektrische Spannung in einer Komponente des technischen Systems (M);
- eine Verschleißkennzahl einer Komponente des technischen Systems (M);
- eine Anzahl von Schaltvorgängen pro Zeitintervall einer Komponente des technischen Systems (M).

23. Vorrichtung zur rechnergestützten Verarbeitung von Betriebsdaten (BD) eines technischen Systems (M), wobei die Betriebsdaten (BD) während des Betriebs des technischen Systems (M) in einem vorgegebenen Betriebsintervall (BI) erfasst worden sind und als digitale Daten in einem Speicher (SP) hinterlegt sind, wobei die Vorrichtung zur Durchführung eines Verfahrens eingerichtet ist, bei dem:
- aus den Betriebsdaten (BD) für eine Vielzahl von Betriebszeitpunkten (BZ) innerhalb des vorgegebenen Betriebsintervalls (BI) jeweils ein Zustandsvektor (ZV) extrahiert wird, der ein Paar von ersten Zustandsvariablen (v11, v12) mit zugeordneten Zustandswerten des technischen Systems (M) zum jeweiligen Betriebszeitpunkt (BZ) und zumindest eine zweite Zustandsvariable (v2) aus einer Anzahl von zweiten Zustandsvariablen (v2) mit zugeordneten Zustandswerten des technischen Systems (M) zum jeweiligen Betriebszeitpunkt (BZ) umfasst;
- eine zweidimensionale Darstellung (AS) auf einer Anzeige (DI) einer Benutzerschnittstelle (UI) generiert wird, wobei die Darstellung (AS) dem zweidimensionalen Raum der Zustandswerte der Paare von ersten Zustandsvariablen (v11, v12) der Zustandsvektoren (ZV) in einem kartesischen Koordinatensystem entspricht und in der Darstellung (AS) eine Vielzahl von aneinander angrenzenden Zustandsbereichen (ZB) wiedergegeben ist, wobei alle Zustandsvektoren (ZV) mit Zustandswerten von Paaren von ersten Zustandsvariablen (v11, v12) innerhalb eines jeweiligen Zustandsbereichs (ZB) diesem Zustandsbereich (ZB) zugeordnet sind und für die Zustandswerte jeder zweiten Zustandsvariablen (v2) der Zustandsvektoren (ZV), die dem jeweiligen Zustandsbereich (ZB) zugeordnet sind, ein Schwellwertkriterium umfassend zumindest einen Schwellwert definiert ist, wobei bei Erfüllung des Schwellwertkriteriums der entsprechende Zustandswert der jeweiligen zweiten Zustandsvariablen (v2) des Zustandsvektors (ZV) als normal für den Betrieb des technischen Systems (M) eingestuft wird;
- in einem jeweiligen Zustandsbereich (ZB) ein Balkendiagramm wiedergegeben wird, in dem zu jeder zweiten Zustandsvariablen (v2) ein erster Balken (B1) und ein zweiter Balken (B2) des Balkendiagramms gehört, wobei
- die Länge des ersten Balkens (B1) die Anzahl von ersten Zustandsvektoren oder eine aus den Betriebszeitpunkten (BZ) der ersten Zustandsvektoren abgeleitete Auftretenszeitspanne für die Anzahl von ersten Zustandsvektoren repräsentiert, wobei die ersten Zustandsvektoren alle Zustandsvektoren (ZV) sind, welche dem jeweiligen Zustandsbereich (ZB) zugeordnet sind und die jeweilige zweite Zustandsvariable (v2) enthalten, oder alle Zustandsvektoren (ZV) sind, die dem jeweiligen Zustandsbereich (ZB) zugeordnet sind und die jeweilige zweite Zustandsvariable (v2) enthalten und für welche ferner der Zustandswert der jeweiligen zweiten Zustandsvariablen (v2) das Schwellwertkriterium erfüllt;
- die Länge des zweiten Balkens (B2) die Anzahl von zweiten Zustandsvektoren oder eine aus den Betriebszeitpunkten (BZ) der zweiten Zustandsvektoren abgeleitete Auftretenszeitspanne für die Anzahl von zweiten Zustandsvektoren repräsentiert, wobei die zweiten Zustandsvektoren alle Zustandsvektoren (ZV) sind, welche dem jeweiligen Zustandsbereich (ZB) zugeordnet sind und die jeweilige zweite Zustandsvariable (v2) enthalten und für welche ferner der Zustandswert der zweiten Zustandsvariablen (v2) das Schwellwertkriterium nicht erfüllt,
wobei das Balkendiagramm die Gesamtanzahl von aufgetretenen Zuständen im entsprechenden Zustandsbereich sowie die Information, ob kritische Zustände eingenommen wurden, vermittelt.

24. Vorrichtung nach Anspruch 23, wobei die Vorrichtung zur Durchführung eines Verfahrens nach einem der Ansprüche 2 bis 22 eingerichtet ist.

25. Computerprogrammprodukt mit einem auf einem maschinenlesbaren Träger gespeicherten Programmcode zur Durchführung eines Verfahrens nach einem der Ansprüche 1 bis 22, wenn der Programmcode auf einem Computer ausgeführt wird.

26. Computerprogramm mit einem Programmcode zur Durchführung eines Verfahrens nach einem der Ansprüche 1 bis 22, wenn der Programmcode auf einem Computer ausgeführt wird.

## Claims

1. Method for the computer-aided processing of operating data (BD) of a technical system (M), wherein the operating data (BD) have been recorded during operation of the technical system (M) in a predefined operating interval (BI) and are stored in a memory (SP) in the form of digital data, wherein:
- a respective state vector (ZV) is extracted from the operating data (BD) for a multiplicity of operating times (BZ) within the predefined operating interval (BI), which state vector comprises a pair of first state variables (v11, v12) containing associated state values of the technical system (M) at the respective operating time (BZ) and at least one second state variable (v2) from a number of second state variables (v2) containing associated state values of the technical system (M) at the respective operating time (BZ);
- a two-dimensional display (AS) is generated on a display (DI) of a user interface (UI), wherein the display (AS) corresponds to the two-dimensional space of the state values of the pairs of first state variables (v11, v12) of the state vectors (ZV) in a Cartesian coordinate system and the display (AS) depicts a multiplicity of adjacent state ranges (ZB), wherein all of the state vectors (ZV) containing state values of pairs of first state variables (v11, v12) within a respective state range (ZB) are assigned to this state range (ZB), and a threshold value criterion comprising at least one threshold value is defined for the state values of each second state variable (v2) of the state vectors (ZV) assigned to the respective state range (ZB), wherein, when the threshold value criterion is met, the corresponding state value of the respective second state variable (v2) of the state vector (ZV) is classified as normal for the operation of the technical system (M);
- a bar chart is depicted in a respective state range (ZB), in which bar chart a first bar (B1) and a second bar (B2) of the bar chart belong to each second state variable (v2), wherein
- the length of the first bar (B1) represents the number of first state vectors or an occurrence time period, derived from the operating times (BZ) of the first state vectors, for the number of first state vectors, wherein the first state vectors are all state vectors (ZV) that are assigned to the respective state range (ZB) and contain the respective second state variable (v2) or are all state vectors (ZV) that are assigned to the respective state range (ZB) and contain the respective second state variable (v2) and for which the state value of the respective second state variable (v2) also meets the threshold value criterion;
- the length of the second bar (B2) represents the number of second state vectors or an occurrence time period, derived from the operating times (BZ) of the second state vectors, for the number of second state vectors, wherein the second state vectors are all state vectors (ZV) that are assigned to the respective state range (ZB) and contain the respective second state variable (v2) and for which the state value of the second state variable (v2) also does not meet the threshold value criterion,
wherein the bar chart conveys the total number of states that have occurred in the appropriate state range and the information as to whether critical states have been adopted.

2. Method according to Claim 1, wherein the respective state ranges (ZB) are adjoining rectangles.

3. Method according to Claim 1 or 2, wherein the first bar or bars (B1) in each bar chart are offset with respect to an axis (A2) of the Cartesian coordinate system in comparison with the second bar or bars (B2).

4. Method according to one of the preceding claims, wherein all of the first and second bars (B1, B2) extend parallel to the same axis (A2) of the Cartesian coordinate system in their longitudinal direction.

5. Method according to one of the preceding claims, wherein a respective threshold value criterion comprises a lower threshold value (SW1) and an upper threshold value (SW2) for state values of a respective second state variable (v2) in the respective state range (ZB), wherein the threshold value criterion is met when the state value of the respective second state variable (v2) is between the lower and upper threshold value (SW1, SW2).

6. Method according to Claim 5, wherein a respective second bar (B2) of at least some of the second bars (B2) is arranged on a base line (GL) in the two-dimensional display (AS), wherein the bar section (BA1) on one side of the base line represents second state vectors containing state values of the respective second state variable (v2) below the lower threshold value (SW1) and the bar section (BA2) on the other side of the base line (GL) represents second state vectors containing state values of the respective second state variable (v2) above the upper threshold value (SW2).

7. Method according to Claim 6, wherein the bar sections (BA1, BA2) on the different sides of the base line (GL) have different colors.

8. Method according to Claim 6 or 7, wherein the same base line (GL) is used for all of the second bars (B2) within a bar chart in the two-dimensional display (AS).

9. Method according to one of Claims 6 to 8, wherein the base lines (GL) are arranged at the same position with respect to the other axis (A2) of the Cartesian coordinate system in all of the bar charts that are next to one another along an axis (A1) of the Cartesian coordinate system in the two-dimensional display (AS).

10. Method according to one of the preceding claims, wherein the first bars (B1) extend in their longitudinal direction along the other axis (A2) of the Cartesian coordinate system in all of the bar charts that are next to one another along an axis (A1) of the Cartesian coordinate system in the two-dimensional display (AS), and start at the same position with respect to the other axis (A2).

11. Method according to one of the preceding claims, wherein the extent of the deviation of the state values of the second state vectors in the corresponding state range (ZB) from the threshold value criterion is represented by the filling of a respective second bar (B2) of at least some of the second bars (B2) in the two-dimensional display (AS).

12. Method according to Claim 11, wherein the extent of the deviation is represented by the color saturation or the brightness or the color of the filling.

13. Method according to Claim 11 or 12 in combination with Claim 5, wherein the extent of the deviation for second state vectors containing state values of the respective second state variable (v2) below the lower threshold value (SW1) corresponds to the sum of the absolute differences between these state values and the lower threshold value (SW1) or depends on this sum, and/or wherein the extent of the deviation for second state vectors containing state values of the respective second state variable (v2) above the upper threshold value (SW2) corresponds to the sum of the absolute differences between these state values and the upper threshold value (SW2) or depends on this sum.

14. Method according to one of the preceding claims, wherein the user interface (UI) allows a user to input a command that triggers the depiction, in each case for one or more second state variables, of a detailed view (DS) on the display (DI) for state values of the respective second state variable (v2) for one or more state ranges (ZB).

15. Method according to Claim 14, wherein the detailed view (DS) comprises a two-dimensional chart with a time axis and an axis perpendicular thereto and representing the state values of the respective second state variable (v2), wherein the two-dimensional chart depicts the state values of the respective second state variable (v2) of the state vectors (ZV) that are assigned to the one or more state ranges (ZB) as data points (DP) as a function of the operating times (BZ) of the occurrence of the state values in the predefined operating interval (BI).

16. Method according to Claim 15, wherein data points (DP) that are adjacent along the time axis are at least partly connected to one another via lines.

17. Method according to Claim 15 or 16, wherein the data points (DP) for different state ranges (ZB) are displayed differently in the two-dimensional chart.

18. Method according to one of the preceding claims, wherein the user interface (UI) allows a user to input a command by way of which the threshold value criterion is adjusted.

19. Method according to one of the preceding claims, wherein the method is performed during operation of the technical system (M).

20. Method according to Claim 19, wherein the user interface (UI) allows a user to input a command that brings about a change to one or more manipulated variables in the technical system (M) during operation.

21. Method according to one of the preceding claims, wherein the technical system (M) comprises an electric motor and/or a gas turbine and/or a contactor.

22. Method according to one of the preceding claims, wherein the operating data (BD) and/or the first state variables (v11, v12) and/or the number of second state variables (v2) comprise one or more of the following variables:
- an electric power of a component of the technical system (M) ;
- a rate of rotation of a component of the technical system (M) ;
- a torque of a component of the technical system (M);
- a temperature at a point in the technical system (M);
- an electric current in a component of the technical system (M);
- a voltage in a component of the technical system (M);
- a wear index of a component of the technical system (M);
- a number of switching procedures per time interval of a component of the technical system (M).

23. Device for the computer-aided processing of operating data (BD) of a technical system (M), wherein the operating data (BD) have been recorded during operation of the technical system (M) in a predefined operating interval (BI) and are stored in a memory (SP) in the form of digital data, wherein the device is configured so as to perform a method in which:
- a respective state vector (ZV) is extracted from the operating data (BD) for a multiplicity of operating times (BZ) within the predefined operating interval (BI), which state vector comprises a pair of first state variables (v11, v12) containing associated state values of the technical system (M) at the respective operating time (BZ) and at least one second state variable (v2) from a number of second state variables (v2) containing associated state values of the technical system (M) at the respective operating time (BZ);
- a two-dimensional display (AS) is generated on a display (DI) of a user interface (UI), wherein the display (AS) corresponds to the two-dimensional space of the state values of the pairs of first state variables (v11, v12) of the state vectors (ZV) in a Cartesian coordinate system and the display (AS) depicts a multiplicity of adjacent state ranges (ZB), wherein all of the state vectors (ZV) containing state values of pairs of first state variables (v11, v12) within a respective state range (ZB) are assigned to this state range (ZB), and a threshold value criterion comprising at least one threshold value is defined for the state values of each second state variable (v2) of the state vectors (ZV) assigned to the respective state range (ZB), wherein, when the threshold value criterion is met, the corresponding state value of the respective second state variable (v2) of the state vector (ZV) is classified as normal for the operation of the technical system (M);
- a bar chart is depicted in a respective state range (ZB), in which bar chart a first bar (B1) and a second bar (B2) of the bar chart belong to each second state variable (v2), wherein
- the length of the first bar (B1) represents the number of first state vectors or an occurrence time period, derived from the operating times (BZ) of the first state vectors, for the number of first state vectors, wherein the first state vectors are all state vectors (ZV) that are assigned to the respective state range (ZB) and contain the respective second state variable (v2) or are all state vectors (ZV) that are assigned to the respective state range (ZB) and contain the respective second state variable (v2) and for which the state value of the respective second state variable (v2) also meets the threshold value criterion;
- the length of the second bar (B2) represents the number of second state vectors or an occurrence time period, derived from the operating times (BZ) of the second state vectors, for the number of second state vectors, wherein the second state vectors are all state vectors (ZV) that are assigned to the respective state range (ZB) and contain the respective second state variable (v2) and for which the state value of the second state variable (v2) also does not meet the threshold value criterion,
wherein the bar chart conveys the total number of states that have occurred in the appropriate state range and the information as to whether critical states have been adopted.

24. Device according to Claim 23, wherein the device is configured so as to perform a method according to one of Claims 2 to 22.

25. Computer program product containing program code stored on a machine-readable medium for performing a method according to one of Claims 1 to 22 when the program code is executed on a computer.

26. Computer program containing a program code for performing a method according to one of Claims 1 to 22 when the program code is executed on a computer.

## Revendications

1. Procédé de traitement assisté par ordinateur de données de fonctionnement (BD) d'un système technique (M), dans lequel les données de fonctionnement (BD) sont détectées pendant le fonctionnement du système technique (M) dans un intervalle de fonctionnement donné (BI) et enregistrées sous forme de données numériques dans une mémoire (SP) :
- un vecteur d'état (ZV) étant extrait à partir des données de fonctionnement (BD) pour une pluralité de moments de fonctionnement (BZ) au sein de l'intervalle de fonctionnement donné (BI), lequel vecteur d'état comprend une paire de premières variables d'état (v11, v12) avec des valeurs d'état correspondantes du système technique (M) à chaque moment de fonctionnement (BZ) et au moins une seconde variable d'état (v2) parmi une pluralité de secondes variables d'état (v2) avec des valeurs d'état correspondantes du système technique (M) à chaque moment de fonctionnement (BZ) ;
- une représentation bidimensionnelle (AS) étant générée sur un affichage (DI) d'une interface utilisateur (UI), la représentation (AS) correspondant à l'espace bidimensionnel des valeurs d'état des paires de premières variables d'état (v11, v12) des vecteurs d'état (ZV) dans un système de coordonnées cartésiennes et une pluralité de plages d'état contiguës (ZB) est reproduite dans la représentation (AS), tous les vecteurs d'état (ZV) avec des valeurs d'état de paires de premières variables d'état (v11, v12) dans une plage d'état respective (ZB) étant affectés à cette plage d'état (ZB) et pour les valeurs d'état de chaque seconde variable d'état (v2) des vecteurs d'état (ZV), qui sont affectés à la plage d'état respective (ZB), un critère de valeur-seuil comprenant au moins une valeur-seuil est défini, la valeur d'état correspondante de la seconde variable d'état respective (v2) du vecteur d'état (ZV) étant classée comme normale pour le fonctionnement du système technique (M) lors de la satisfaction du critère de valeur-seuil ;
- un histogramme étant représenté dans une plage d'état respective (ZB) dans lequel une première barre (B1) et une seconde barre (B2) de l'histogramme appartiennent à chaque seconde variable d'état (v2),
- la longueur de la première barre (B1) représentant le nombre de premiers vecteurs d'état ou un intervalle de temps d'occurrence dérivé des moments de fonctionnement (BZ) des premiers vecteurs d'état pour le nombre de premiers vecteurs d'état, les premiers vecteurs d'état étant tous les vecteurs d'état (ZV) qui sont affectés à la plage d'état respective (ZB) et qui contiennent la seconde variable d'état respective (v2), ou tous les vecteurs d'état (ZV) qui sont affectés à la plage d'état respective (ZB) et qui contiennent la seconde variable d'état respective (v2) et pour lesquels, en outre, la valeur d'état de la seconde variable d'état respective (v2) satisfait au critère de valeur-seuil ;
- la longueur de la seconde barre (B1) représentant le nombre de seconds vecteurs d'état ou un intervalle de temps d'occurrence dérivé des moments de fonctionnement (BZ) des seconds vecteurs d'état pour le nombre de seconds vecteurs d'état, les seconds vecteurs d'état étant tous les vecteurs d'état (ZV) qui sont affectés à la plage d'état respective (ZB) et qui contiennent la seconde variable d'état respective (v2) et pour lesquelles, en outre, la valeur d'état de la seconde variable d'état (v2) ne satisfait pas au critère de valeur-seuil, l'histogramme transmettant le nombre total d'états qui se sont produits dans la plage d'état correspondante ainsi que les informations indiquant si des états critiques ont été pris.

2. Procédé selon la revendication 1, dans lequel les plages d'état respectives (ZB) sont des rectangles contigus.

3. Procédé selon la revendication 1 ou 2, dans lequel dans chaque histogramme, la ou les premières barres (B1) sont décalées par rapport à un axe (A2) du système de coordonnées cartésiennes par rapport à la ou aux deuxièmes barres (B2).

4. Procédé selon l'une des revendications précédentes, dans lequel l'ensemble des premières et secondes barres (B1, B2) s'étendent dans leur direction longitudinale parallèlement au même axe (A2) du système de coordonnées cartésiennes.

5. Procédé selon l'une des revendications précédentes, dans lequel un critère de valeur-seuil respectif comprend une valeur-seuil inférieure (SW1) et une valeur-seuil supérieure (SW2) pour des valeurs d'état d'une seconde variable d'état respective (v2) dans la plage d'état respective (ZB), le critère de valeur-seuil étant satisfait lorsque la valeur d'état de la seconde variable d'état respective (v2) se situe entre la valeur-seuil inférieure et supérieure (SW1, SW2).

6. Procédé selon la revendication 5, dans lequel une seconde barre (B2) respective d'au moins une partie de la seconde barre (B2) dans la représentation bidimensionnelle (AS) est disposée sur une ligne de base (GL), des seconds vecteurs d'état avec des valeurs d'état de la seconde variable d'état respective (v2) en dessous de la valeur-seuil inférieure (SW1) étant représentés par la section de barre (BAI) sur un côté de la ligne de base et des seconds vecteurs d'état avec des valeurs d'état de la seconde variable d'état respective (v2) au-dessus de la valeur-seuil supérieure (SW2) étant représentés par la section de barre (BA2) sur l'autre côté de la ligne de base (GL).

7. Procédé selon la revendication 6, dans lequel les sections de barre (BAI, BA2) présentent des couleurs différentes sur les différents côtés de la ligne de base (GL).

8. Procédé selon la revendication 6 ou 7, dans lequel la même ligne de base (GL) est utilisée dans la représentation bidimensionnelle (AS) pour l'ensemble des secondes barres (B2) dans un histogramme.

9. Procédé selon l'une des revendications 6 à 8, dans lequel les lignes de base (GL) sont disposées à la même position par rapport à l'autre axe (A2) du système de coordonnées cartésiennes dans tous les histogrammes qui se trouvent les uns à côté des autres dans la représentation bidimensionnelle (AS) le long d'un axe (A1) du système de coordonnées cartésiennes (A2).

10. Procédé selon l'une des revendications précédentes, dans lequel les premières barres (B1) s'étendent dans la direction longitudinale le long de l'autre axe (A2) du système de coordonnées cartésiennes dans tous les histogrammes qui se trouvent les uns à côté des autres dans la représentation bidimensionnelle (AS) le long d'un axe (A1) du système de coordonnées cartésiennes (A2), et commencent à la même position par rapport à l'autre axe (A2).

11. Procédé selon l'une des revendications précédentes, dans lequel l'ampleur de l'écart des valeurs d'état des seconds vecteurs d'état dans la plage d'état (ZB) correspondante par rapport au critère de valeur-seuil est représentée par le remplissage d'une seconde barre (B2) respective d'au moins une partie des secondes barres (B2) dans la représentation bidimensionnelle (AS).

12. Procédé selon la revendication 11, dans lequel l'ampleur de l'écart est représentée par la saturation de couleur ou la luminosité ou la couleur du remplissage.

13. Procédé selon la revendication 11 ou 12 en association avec la revendication 5, dans lequel l'ampleur de l'écart pour les seconds vecteurs d'état avec des valeurs d'état des secondes variables d'état respectives (v2) inférieures à la valeur-seuil inférieure (SW1) correspond à la somme des différences absolues entre ces valeurs d'état et la valeur-seuil inférieure (SW1) ou dépend de cette somme et/ou dans lequel l'ampleur de l'écart pour les seconds vecteurs d'état avec des valeurs d'état des secondes variables d'état respectives (v2) supérieures à la valeur seuil supérieure (SW2) correspond à la somme des différences absolues entre ces valeurs d'état et la valeur-seuil supérieure (SW2) ou dépend de cette somme.

14. Procédé selon l'une des revendications précédentes, dans lequel l'interface utilisateur (UI) permet à un utilisateur d'entrer une commande qui, pour une ou plusieurs secondes variables d'état, déclenche la représentation d'une vue détaillée (DS) sur l'affichage (DI) pour les valeurs d'état des secondes variables d'état respectives (v2) pour une ou plusieurs plages d'état (ZB).

15. Procédé selon la revendication 14, dans lequel la vue détaillée (DS) comprend un diagramme bidimensionnel avec un axe de temps et un axe perpendiculaire à celui-ci et représentant les valeurs d'état des secondes variables d'état respectives (v2), le diagramme bidimensionnel représentant les valeurs d'état des secondes variables d'état respectives (v2) des vecteurs d'état (ZV), qui sont affectées à la ou aux plages d'état (ZB), en tant que points de données (DP) en fonction des moments de fonctionnement (BZ) de l'occurrence des valeurs d'état dans l'intervalle de fonctionnement donné (BI).

16. Procédé selon la revendication 15, dans lequel des points de données (DP) adjacents le long de l'axe de temps sont au moins partiellement reliés entre eux par des lignes.

17. Procédé selon la revendication 15 ou 16, dans lequel les points de données (DP) pour différentes plages d'état (ZB) sont représentés différemment dans le diagramme bidimensionnel.

18. Procédé selon l'une des revendications précédentes, dans lequel l'interface utilisateur (UI) permet à un utilisateur d'entrer une commande avec laquelle le critère de valeur-seuil est adapté.

19. Procédé selon l'une des revendications précédentes, dans lequel le procédé est mis en œuvre pendant le fonctionnement du système technique (M).

20. Procédé selon la revendication 19, dans lequel l'interface utilisateur (UI) permet à un utilisateur d'entrer une commande qui provoque la modification d'une ou plusieurs variables dans le système technique (M) pendant le fonctionnement.

21. Procédé selon l'une des revendications précédentes, dans lequel le système technique (M) comprend un moteur électrique et/ou une turbine à gaz et/ou un contacteur.

22. Procédé selon l'une des revendications précédentes, dans lequel les données de fonctionnement (BD) et/ou les premières variables d'état (v11, v12) et/ou la pluralité de secondes variables d'état (v2) comprennent une ou plusieurs des variables suivantes :
- une puissance électrique d'un composant du système technique (M) ;
- une vitesse d'un composant du système technique (M) ;
- un couple d'un composant du système technique (M) ;
- une température en un point du système technique (M) ;
- un courant électrique dans un composant du système technique (M) ;
- une tension électrique aux bornes d'un composant du système technique (M) ;
- un indice d'usure d'un composant du système technique (M) ;
- un nombre de commutations par intervalle de temps d'un composant du système technique (M).

23. Dispositif de traitement assisté par ordinateur de données de fonctionnement (BD) d'un système technique (M), dans lequel les données de fonctionnement (BD) sont détectées pendant le fonctionnement du système technique (M) dans un intervalle de fonctionnement donné (BI) et enregistrées sous forme de données numériques dans une mémoire (SP), le dispositif étant conçu pour mettre en œuvre un procédé, dans lequel :
- un vecteur d'état (ZV) est extrait à partir des données de fonctionnement (BD) pour une pluralité de moments de fonctionnement (BZ) au sein de l'intervalle de fonctionnement donné (BI), lequel vecteur d'état comprend une paire de premières variables d'état (v11, v12) avec des valeurs d'état correspondantes du système technique (M) à chaque moment de fonctionnement (BZ) et au moins une seconde variable d'état (v2) parmi une pluralité de secondes variables d'état (v2) avec des valeurs d'état correspondantes du système technique (M) à chaque moment de fonctionnement (BZ) ;
- une représentation bidimensionnelle (AS) est générée sur un affichage (DI) d'une interface utilisateur (UI), la représentation (AS) correspondant à l'espace bidimensionnel des valeurs d'état des paires de premières variables d'état (v11, v12) des vecteurs d'état (ZV) dans un système de coordonnées cartésiennes et une pluralité de plages d'état contiguës (ZB) est reproduite dans la représentation (AS), tous les vecteurs d'état (ZV) avec des valeurs d'état de paires de premières variables d'état (v11, v12) dans une plage d'état respective (ZB) étant affectés à cette plage d'état (ZB) et pour les valeurs d'état de chaque seconde variable d'état (v2) des vecteurs d'état (ZV), qui sont affectées à la plage d'état respective (ZB), un critère de valeur-seuil comprenant au moins une valeur-seuil est défini, la valeur d'état correspondante de la seconde variable d'état respective (v2) du vecteur d'état (ZV) étant classée comme normale pour le fonctionnement du système technique (M) lors de la satisfaction du critère de valeur-seuil ;
- un histogramme est représenté dans une plage d'état respective (ZB) dans lequel une première barre (B1) et une seconde barre (B2) de l'histogramme appartiennent à chaque seconde variable d'état (v2),
- la longueur de la première barre (B1) représente le nombre de premiers vecteurs d'état ou un intervalle de temps d'occurrence dérivé des moments de fonctionnement (BZ) des premiers vecteurs d'état pour le nombre de premiers vecteurs d'état, les premiers vecteurs d'état étant tous les vecteurs d'état (ZV) qui sont affectés à la plage d'état respective (ZB) et qui contiennent la seconde variable d'état respective (v2), ou tous les vecteurs d'état (ZV) qui sont affectés à la plage d'état respective (ZB) et qui contiennent la seconde variable d'état respective (v2) et pour lesquels, en outre, la valeur d'état de la seconde variable d'état respective (v2) satisfait au critère de valeur-seuil ;
- la longueur de la seconde barre (B1) représente le nombre de seconds vecteurs d'état ou un intervalle de temps d'occurrence dérivé des moments de fonctionnement (BZ) des seconds vecteurs d'état pour le nombre de seconds vecteurs d'état, les seconds vecteurs d'état étant tous les vecteurs d'état (ZV) qui sont affectés à la plage d'état respective (ZB) et qui contiennent la seconde variable d'état respective (v2) et pour lesquelles, en outre, la valeur d'état de la seconde variable d'état (v2) ne satisfait pas au critère de valeur-seuil, l'histogramme transmettant le nombre total d'états qui se sont produits dans la plage d'état correspondante ainsi que les informations indiquant si des états critiques ont été pris.

24. Dispositif selon la revendication 23, dans lequel le dispositif est conçu pour mettre en œuvre un procédé selon l'une des revendications 2 à 22.

25. Produit programme informatique comportant un code de programme stocké sur un support lisible par machine pour la mise en œuvre d'un procédé selon l'une des revendications 1 à 22, lorsque le code de programme est exécuté sur un ordinateur.

26. Produit programme informatique comportant un code de programme pour la mise en œuvre d'un procédé selon l'une des revendications 1 à 22, lorsque le code de programme est exécuté sur un ordinateur.
